# EUROPEAN PATENT SPECIFICATION

(11) **EP 4 039 072 B1**
(45) Date of publication and mention of the grant of the patent: **13.12.2023**
(21) Application number: 22155207.8
(22) Date of filing: 04.02.2022
(51) Int. Cl.: A01B 59/043, F15B 11/22

(54) **AGRICULTURAL OR WORK VEHICLE EQUIPPED WITH A HYDRAULIC LIFT**
LANDWIRTSCHAFTLICHES FAHRZEUG ODER ARBEITSFAHRZEUG MIT EINER HYDRAULISCHEN HEBEVORRICHTUNG
VÉHICULE AGRICOLE OU ENGIN DE TRAVAIL ÉQUIPÉ D'UN ÉLÉVATEUR HYDRAULIQUE

(30) Priority: 05.02.2021 IT 202100002648
(43) Date of publication of application: 10.08.2022
(73) Proprietor: CNH Industrial Italia S.p.A., 10156 Torino (IT)
(72) Inventor: CIARROCCHI, Marco Pietro, 64027 Sant'Omero (TE) (IT); PINTORE, Francesco, 41121 Modena (IT)
(74) Representative: CNH Industrial IP Department

(56) References cited:
- EP-A1- 2 765 844
- EP-A1- 2 884 118
- EP-A1- 2 889 515
- FR-A1- 2 139 153
- JP-A- H09 133 102

## Description

### Field of the invention

The present invention relates to the field of agricultural or work vehicles equipped with a hydraulic lift for lifting loads or devices to be associated to the vehicle itself.

### State of the art

Agricultural or work vehicles are equipped with a hydraulic lift located at the rear of the vehicle. ISO730 standardizes the mechanical and dimensional characteristics of these lifting systems.

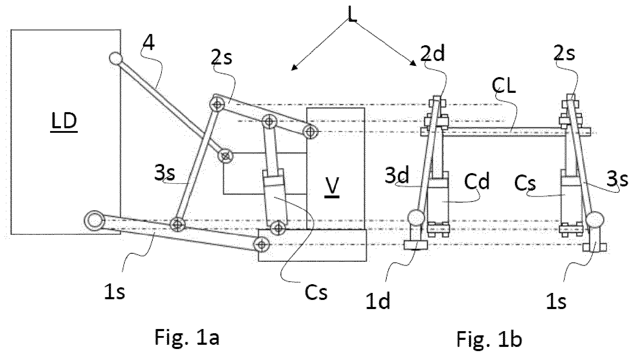

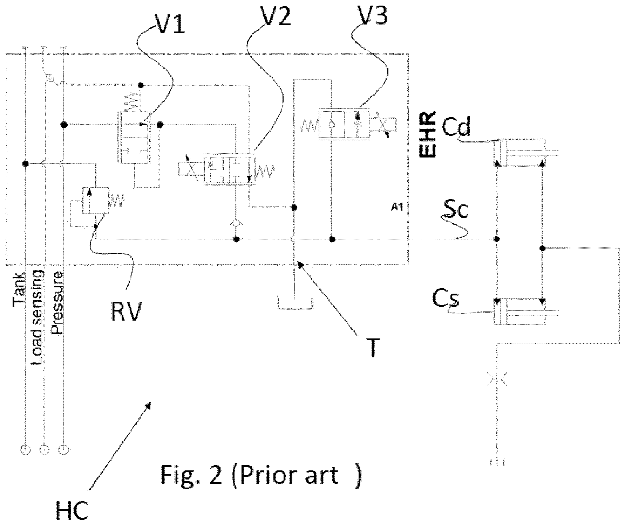

Figures 1a and 1b show an example of hydraulic lift L according to the known art, while figure 2 shows a hydraulic control circuit of the lift according to the known art.

Figure 1a shows the lift from the side. It is generally formed by a 3-point articulation comprising:
- two lower levers 1s, 1d,
- two upper arms 2s, 2d,
- two connecting rods 3s, 3d that connect the lower arm and the upper connecting rod
- a connecting rod or "third point" 4 directly hinged to the vehicle frame (not shown) as well as the lower levers and upper arms.

Each upper arm (4s and 4d) is moved by a hydraulic cylinder, generally double-action type, Cs, Cd which acts between a part of the vehicle frame and an intermediate point of the upper arm, so that an extension of the actuator brings the upper arm to lift the opposite end to the one hinged to the vehicle frame. This opposite end, being hinged to the rod 3s, 3d leading the latter to impose a proportional lifting to the lower lever.

Since the connecting rod 4 is hinged for one end to the vehicle frame and for the opposite end to the load frame LD (generally an agricultural tool or transport system), the connection rod is also induced to rise following its own trajectory to the load.

It is clear that the load connected to the lift is shown schematically.

Between the upper right connecting rod 2d and the upper left connecting rod 2s there is a stiffening bar CL which has the purpose of interconnecting the right rod with the left one.

Figure 2 shows a hydraulic control circuit of the hydraulic cylinders Cs, Cd.

For convenience, only the chambers of the hydraulic cylinders intended to expand when it is necessary to lift a load are taken into consideration, while any opposite chambers are connected to the hydraulic circuit in a per se known manner.

Since these chambers tend to extend their respective hydraulic actuators, they are hereinafter referred to as "expansion chambers".

The expansion chamber of each cylinder is connected to a common source of supply of hydraulic oil, wherein control valves V1, V2, V3 are shown in the EHR block, connecting the pressure source with the expansion chambers of the hydraulic cylinders Cs, CD.

The first valve V1 is a local compensator, which regulates the flow rate on the supply branch according to the Load Sensing LS signal of the lift and the pressure on the supply branch itself.

The second valve V2 controls, with a proportional regulation, the lifting of the load LD.

The third valve V3 proportionally controls the lowering of the load, connecting the hydraulic cylinders to the exhaust. The overpressure valve RV has the task of releasing any hydraulic oil into the recovery tank T in case of exceeding a predetermined threshold pressure on the hydraulic line L which interconnects the EHR block with the expansion chambers of the hydraulic cylinders.

As a whole, the control block EHR has the task of controlling the flow from the source of hydraulic oil such as a hydraulic pump to the expansion chambers and that of controlling the flow of hydraulic oil from the expansion chambers to the recovery tank (Tank) of hydraulic oil, from which the hydraulic pump draws the oil to send it back into circulation.

It can be seen that the expansion chambers of the cylinders are connected with the EHR control block by means of a single hydraulic line Sc, through which the hydraulic oil can pass in both directions depending on the lifting or lowering of the lift.

When the load applied to the lift is arranged in such a way as to weigh in a different way on the hydraulic cylinders Cs and Cd, since the chambers of the same cylinders are interconnected, a displacement of hydraulic oil from one chamber to the other is determined which causes the cylinder to be less loaded to extend further. This unbalanced loading of the quadrilaterals and the distribution of hydraulic oil in the respective expansion chambers of the hydraulic cylinders is balanced by the stiffening bar CL. The set of 2s and 2d upper connecting rods and the stiffening bar therefore works as a torsion bar.

In relation to the type of lift, a proportionally strong and heavy stiffening bar CL must be provided. All this entails an overall weighting of the vehicle and a greater cost of production of the hydraulic lift.

This problem is particularly felt when the lifted load is asymmetrical with respect to the tractor axis, as happens with many attachments. In this case, asymmetrical loads are generated on the two sides of the lift, often with oscillating characteristics, during transport on rough terrain or while working of the soil, which must be fully absorbed by the stiffening bar. Further known work vehicles are disclosed in EP 2 884 118 A1, EP 2 889 515 A1, FR 2 139 153 A1, JP H09 133102 A, and EP 2 765 844 A1.

### Summary of the invention

The object of the present invention is to make the hydraulic lift less sensitive to a loading asymmetry of the quadrilaterals defining the hydraulic lift and of the respective hydraulic cylinders.

The basic idea of the present invention is to modify the hydraulic circuit for feeding the expansion chambers of the hydraulic cylinders enslaved to the articulated quadrilaterals defining the hydraulic lift described above, so as to keep the expansion chambers interconnected during lifting, but to disconnect them from each other when the lift is in stationary conditions.

More specifically, the idea is to connect the single hydraulic line with the expansion chambers by means of a shuttle valve, so that each of them is independently connected to the single connection line, so that in stationary conditions, the cylinder subject to the greatest load can communicate with the pressure relief valve without transferring hydraulic fluid to the expansion chamber of the other hydraulic cylinder.

A spool valve is arranged to connect the single hydraulic line with the expansion chambers to bypass the shuttle valve.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, wherein:
Figures 1a and 1b show the side and front views respectively of an example of a hydraulic lift of the prior art object of the present invention;
Figure 2 shows a hydraulic circuit, according to the known art, for controlling the hydraulic actuators of the lift of the previous figures;

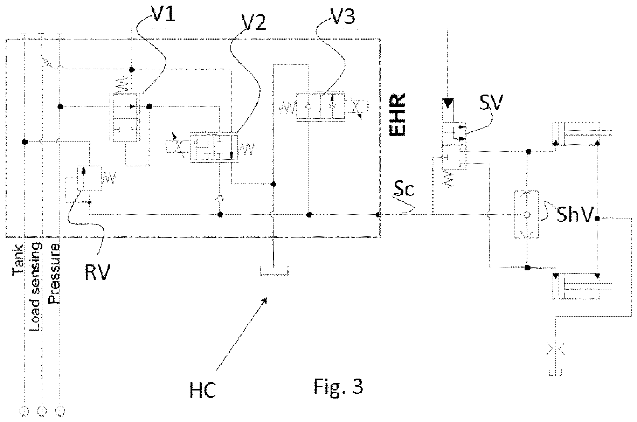

Figure 3 shows a modified hydraulic circuit according to the present invention for controlling the hydraulic lift according to Figures 1a and 1b;
Figure 4 shows an example of an agricultural or work vehicle associated with a hydraulic lift controlled by means of a hydraulic circuit according to the present invention.

The same reference numbers and letters in the figures identify the same elements or components or functions.

For convenience and simplicity of understanding the invention, the same numbers and letters have been used for corresponding parts of the prior art diagrams and diagrams object of the present invention.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

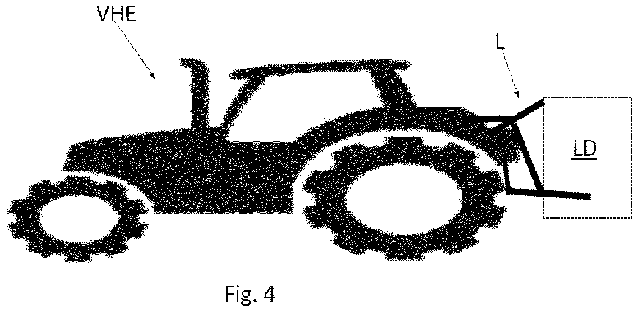

With reference to figure 4, an agricultural or work vehicle VHE is disclosed, equipped with a hydraulic lift L shown on figure 1, the latter comprises two hydraulic cylinders Cs, Cd arranged to lift the same number of arms 2s, 2d of the hydraulic lift, with the arms interconnected by means of a stiffening bar CL. Each hydraulic cylinder comprises an expansion chamber and a hydraulic circuit HC comprising
. a control device EHR and
. a single and common hydraulic line Sc arranged to connect the control device with both expansion chambers of the two hydraulic cylinders.

The control device EHR is arranged to control a flow of hydraulic oil from a source of hydraulic oil, indicated by the relative line having the label "Pressure", towards both expansion chambers during the lifting of the arms and from the expansion chambers towards a recovery tank, indicated with the label "Tank" attributed to the relative line, during the lowering of the arms.

Both expansion chambers are connected to the single and common hydraulic line Sc by means of a shuttle valve ShV and an ON/OFF valve SV arranged to bypass the shuttle valve during the lifting or lowering of the arms.

The ON/OFF valve SV comprises a port operatively connected to a port of the control device EHR and at least one port operatively connected to both expansion chambers and to opposite ports of the shuttle valve ShV.

Therefore, the ON/OF valve SV is arranged to simultaneously connect both expansion chambers of both cylinders to the pressure source to effect lifting/lowering of the load.

The ON/OFF valve is preferably controlled by the Load sensing signal LS which controls the valves V1 and V2.

In particular, when the valve V2 is controlled to command the lifting of the load and therefore the pressurization of the cylinder chambers, it generates a positive signal ("High") on the Load sensing line. This causes the valve SV to switch to open and therefore pressurizing the cylinder chambers.

This solution is particularly advantageous because it allows to keep the control system of the hydraulic cylinders completely hydraulic, that is, without the aid of electrical control lines.

However, a mixed solution can be envisaged in which the control device EHR is controlled by a pressure signal, while the SV valve is controlled by an electrical signal. Alternatively, the entire EHR device, hydraulically controlled, can be converted into an electro-hydraulic device, i.e. electrically controlled and with it the valve SV added to the known control device EHR.

Furthermore, the control device EHR preferably comprises an overpressure valve RV arranged to connect said single hydraulic Sc with said recovery Tank.

Preferably, the ON/OFF valve SV and the control device EHR are operationally controlled by means of a common control line (Load sensing).

The "State of the art" paragraph forms an integral part of this detailed description and therefore, the hydraulic lift L preferably comprises a pair of articulated quadrilaterals, each comprising a lower arm 1s, 1d having a first end hinged to a vehicle frame, an upper connecting rod 2s, 2d having a first end hinged to the vehicle frame, a connecting rod 3s, 3d hinged with its opposite ends to the lower arm and to the lower connecting rod and each of said two hydraulic cylinders Cs, Cd is arranged to act between a part of the vehicle frame and an intermediate point of the upper connecting rod, so that an extension of the actuator brings the upper connecting rod to raise the opposite end to that hinged to the vehicle frame.

In general terms, the present invention relates to a method which provides a first step of operatively interconnecting the expansion chambers only when simultaneously connected with the source of hydraulic oil or with the recovery tank and a second step of mutually disconnecting them when the lift is in stationary conditions.

For the purposes of the present invention, by "stationary conditions" it is meant that the lift is stationary remaining still in any of the admissible positions. Implementation variants of the described non-limiting example are possible, without however departing from the scope of the present invention, including all the equivalent embodiments for a person skilled in the art, to the content of the claims.

From the above description, the person skilled in the art is able to realize the object of the invention without introducing further construction details.

## Claims

1. Agricultural or work vehicle (VHE) equipped with a hydraulic lift (L) comprising
- two hydraulic cylinders (Cs, Cd) arranged to lift the same number of arms (2s, 2d) of the hydraulic lift, with the arms interconnected by means of a stiffening bar (CL), each hydraulic cylinder comprising an expansion chamber,
- a hydraulic circuit (HC) comprising
. a control device (EHR) and
. a single and common hydraulic line (Sc) arranged to connect the control device with both expansion chambers of the two hydraulic cylinders,
wherein the control device (EHR) is arranged to control a flow of hydraulic oil from a hydraulic oil source (Pressure) to both expansion chambers during the lifting of the arms and from the expansion chambers to a recovery tank (Tank) during lowering the arms,
**characterized in that** both expansion chambers are connected to said single and common hydraulic line by means of a shuttle valve (ShV) and an ON/OFF valve (SV) arranged to bypass the shuttle valve during the lifting or lowering procedure of the arms.

2. Vehicle according to claim 1, wherein said ON/OFF valve comprises a door operatively connected with a door of the control device (EHR) and at least one door operatively connected with both expansion chambers and with opposite doors of the shuttle valve (ShV).

3. Vehicle according to any one of the preceding claims wherein said control device (EHR) comprises an overpressure valve (RV) arranged to connect said single hydraulic (Sc) with said recovery tank (Tank).

4. Vehicle according to any one of the preceding claims, wherein said ON/OFF valve (SV) and said control device (EHR) are operationally controlled by means of a common hydraulic control line (Load sensing), so that the entire control system is purely hydraulic.

5. Vehicle according to any one of the preceding claims wherein said hydraulic lift (L) comprises a pair of articulated quadrilaterals, each comprising two lower levers (1s, 1d) having a first end hinged to a vehicle frame, two upper arms (2s, 2d) having a first end hinged to the vehicle frame, two connecting tie rods (3s, 3d) hinged with their opposite ends to the upper arm and to the lower lever and each of said two hydraulic cylinders (Cs, Cd) is arranged to act between a part of the vehicle frame and an intermediate point of the corresponding upper arm, so that an extension of the actuator brings the upper arm to raise the opposite end to the one hinged to the vehicle frame.

6. Control method of a hydraulic circuit (HC) for controlling a hydraulic lift (L) of an agricultural or work vehicle (VHE) wherein the hydraulic lift (L) comprising two hydraulic cylinders (Cs, Cd) arranged for raise as many arms (2s, 2d) of the hydraulic lift, with the arms interconnected by means of a stiffening bar (CL), each hydraulic cylinder including an expansion chamber, and wherein the hydraulic circuit (HC) comprises
. a control device (EHR) ed
. a single and common hydraulic line (Sc) arranged to connect the control device with both expansion chambers of the two hydraulic cylinders,
wherein the control device (EHR) is arranged to control a flow of hydraulic oil from a hydraulic oil source (Pressure) to both expansion chambers during the lifting of the arms and from the expansion chambers to a recovery tank (Tank) during lowering the arms,
the method comprising a first step of operatively interconnecting said expansion chambers only when simultaneously connected with said source of hydraulic oil or with said recovery tank and a second step of mutually disconnecting them when the lift is in stationary conditions.

7. Method according to claim 6, wherein said second step comprises connecting both expansion chambers with said recovery tank independently of each other.

8. Method according to claim 7, wherein said independent connection of the expansion chambers with the recovery tank is made by means of a shuttle valve.

## Patentansprüche

1. Landwirtschafts- oder Arbeitsfahrzeug (VHE), das mit einer hydraulischen Hebevorrichtung (L) ausgestattet ist, mit:
- zwei Hydraulikzylindern (Cs, Cd), die zum Anheben der gleichen Anzahl von Armen (2s, 2d) der hydraulischen Hebevorrichtung angeordnet sind, bei der die Arme mittels einer Versteifungsstange (CL) miteinander verbunden sind, wobei jeder Hydraulikzylinder eine Expansionskammer aufweist,
- einem Hydraulikkreis (HC), der
• ein Steuergerät (EHR) und
• eine einzelne und eine gemeinsame Hydraulikleitung (Sc) aufweist, die dazu angeordnet sind, das Steuergerät mit den beiden Expansionskammern der zwei Hydraulikzylinder zu verbinden,
wobei das Steuergerät (EHR) dazu angeordnet ist, einen Fluss von Hydrauliköl von einer Hydraulikölquelle (Druck) zu den beiden Expansionskammern während des Anhebens der Arme und von den Expansionskammern zu einem Rückgewinnungsbehälter (Tank) während eines Absenkens der Arme zu steuern,
**dadurch gekennzeichnet, dass**
die beiden Expansionskammern mit der einzelnen und der gemeinsamen Hydraulikleitung mittels eines Wechselventils (ShV) verbunden sind und wobei ein An/Aus-Ventil (SV) dazu angeordnet ist, das Wechselventil während des Anhebe- oder des Absenkvorgangs des Arms zu umgehen.

2. Fahrzeug nach Anspruch 1, wobei das An/Aus-Ventil eine Klappe, die wirkend mit einer Klappe des Steuergeräts (EHR) verbunden ist, und mindestens eine Klappe aufweist, die wirkend mit den beiden Expansionskammern und mit gegenüberliegenden Klappen des Wechselventils (ShV) verbunden ist.

3. Fahrzeug nach einem der vorhergehenden Ansprüche, wobei das Steuergerät (EHR) ein Überdruckventil (RV) aufweist, das dazu angeordnet ist, die einzelne Hydraulikleitung (Sc) mit dem Rückgewinnungsbehälter (Tank) zu verbinden.

4. Fahrzeug nach einem der vorhergehenden Ansprüche, wobei das An/Aus-Ventil (SV) und das Steuerventil (EHR) wirkend mittels einer gemeinsamen Hydrauliksteuerleitung (Lasterfassung) gesteuert werden, so dass das gesamte Steuersystem rein hydraulisch ausgebildet ist.

5. Fahrzeug nach einem der vorhergehenden Ansprüche, wobei die hydraulische Hebevorrichtung (L) ein Paar von gelenkigen Vierecken, die jeweils zwei untere Hebel (1s, 1d) mit jeweils einem ersten Ende, das schwenkbar an einem Fahrzeugrahmen befestigt ist, zwei untere Arme (2s, 2d) mit jeweils einem ersten Ende, das schwenkbar an dem Fahrzeugrahmen befestigt ist, und zwei Verbindungszugstangen (3s, 3d) aufweisen, die jeweils mit ihren gegenüberliegenden Enden an dem oberen Arm und an dem unteren Hebel schwenkbar befestigt sind, und wobei jeder der zwei Hydraulikzylinder (Cs, Cd) dazu angeordnet ist, zwischen einem Teil des Fahrzeugrahmens und einem Mittelpunkt des dazugehörigen oberen Arms zu wirken, so dass ein Ausfahren der Betätigungseinrichtung den oberen Arm dazu veranlasst, das gegenüberliegende Ende in Bezug zu dem einen an dem Fahrzeugrahmen schwenkbar befestigten Ende anzuheben.

6. Steuerverfahren eines Hydraulikkreises (HC) zum Steuern einer hydraulischen Hebevorrichtung (L) eines Landwirtschafts-oderArbeitsfahrzeugs (VHE), wobei die hydraulische Hebevorrichtung (L) zwei Hydraulikzylinder (Cs, Cd) aufweist, die dazu angeordnet sind, die gleiche Anzahl von Armen (2s, 2d) der hydraulischen Hebevorrichtung anzuheben, bei der die Arme mittels einer Versteifungsstange (CL) miteinander verbunden sind, wobei jeder Hydraulikzylinder eine Expansionskammer umfasst, und wobei der Hydraulikkreis (HC) aufweist:
• ein Steuergerät (EHR) und
• eine einzelne und eine gemeinsame Hydraulikleitung (Sc), die dazu angeordnet sind, das Steuergerät mit den beiden Expansionskammern der zwei Hydraulikzylinder zu verbinden,
wobei das Steuergerät (EHR) dazu angeordnet ist, einen Fluss von Hydrauliköl von einer Hydraulikölquelle (Druck) zu den beiden Expansionskammern während des Anhebens des Arms und von den Expansionskammern zu einem Rückgewinnungsbehälter (Tank) während eines Absenkens des Arms zu steuern,
wobei das Verfahren einen ersten Schritt eines wirkenden Verbindens der Expansionskammern, nur wenn sie gleichzeitig mit der Hydraulikölquelle oder mit dem Rückgewinnungsbehälter verbunden sind, und einen zweiten Schritt eines gegenseitigen Trennens der Kammern aufweist, wenn die Hebevorrichtung sich in stationären Zuständen befindet.

7. Verfahren nach Anspruch 6, wobei der zweite Schritt ein voneinander unabhängiges Verbinden der beiden Expansionskammern mit dem Rückgewinnungsbehälter aufweist.

8. Verfahren nach Anspruch 7, wobei die unabhängige Verbindung der Expansionskammern mit dem Rückgewinnungsbehälter mittels eines Wechselventils ausgeführt wird.

## Revendications

1. Véhicule agricole ou de travail (VHE) équipe d'un levier hydraulique (L) comprenant
- deux cylindres hydrauliques (Cs, Cd) agencés pour soulever le même nombre de bras (2s, 2d) du levier hydraulique, les bras étant reliés entre eux par une barre de raidissement (CL), chaque cylindre hydraulique comprenant une chambre d'expansion,
- un circuit hydraulique (HC) comprenant
. un dispositif de commande (EHR) et
. une conduite hydraulique unique et commune (Se) disposée pour relier le dispositif de commande aux deux chambres d'expansion des deux cylindres hydrauliques,
dans lequel le dispositif de commande (EHR) est disposé pour commander un flux d'huile hydraulique à partir d'une source d'huile hydraulique (Pression) vers les deux chambres d'expansion pendant le levage des bras et à partir des chambres d'expansion vers un réservoir de récupération (Réservoir) pendant l'abaissement des bras,
**caractérisé en ce que** les deux chambres d'expansion sont reliées à cette conduite hydraulique unique et commune au moyen d'une vanne d'arrêt (ShV) et d'une vanne ON/OFF (SV) conçue pour contourner la vanne d'arrêt pendant la procédure de levage ou d'abaissement des bras.

2. Véhicule selon la revendication 1, dans lequel ladite vanne ON/OFF comprend une porte reliée de manière fonctionnelle à une porte du dispositif de commande (EHR) et au moins une porte reliée de manière fonctionnelle aux deux chambres d'expansion et aux portes opposées de la vanne d'arrêt (ShV).

3. Véhicule selon l'une quelconque des revendications précédentes, dans lequel le dispositif de commande (EHR) comprend une vanne de surpression (RV) conçue pour relier ledit circuit hydraulique unique (Sc) audit réservoir de récupération (Réservoir).

4. Véhicule selon l'une quelconque des revendications précédentes, dans lequel ladite vanne ON/OFF (SV) et ledit dispositif de commande (EHR) sont commandés de manière fonctionnelle au moyen d'une conduite de commande hydraulique commune (Détection de charge), de sorte que l'ensemble du système de commande est purement hydraulique.

5. Véhicule selon l'une quelconque des revendications précédentes, dans lequel ledit levier hydraulique (L) comprend une paire de quadrilatères articulés, chacun comprenant deux leviers inférieurs (1s, 1d) ayant une première extrémité articulée sur le châssis du véhicule, deux bras supérieurs (2s, 2d) ayant une première extrémité articulée sur le châssis du véhicule, deux tirants de liaison (3s, 3d) reliés par leurs extrémités opposées au bras supérieur et au levier inférieur, et chacun desdits deux cylindres hydrauliques (Cs, Cd) est agencé pour agir entre le châssis du véhicule et un point intermédiaire du bras supérieur correspondant, de sorte qu'une extension de l'actionneur amène le bras supérieur à soulever l'extrémité opposée à celle qui est reliée au châssis du véhicule.

6. Procédé de commande d'un circuit hydraulique (HC) pour la commande d'un levier hydraulique (L) d'un véhicule agricole ou de travail (VHE), dans lequel le levier hydraulique (L) comprend deux cylindres hydrauliques (Cs, Cd) disposés pour soulever autant de bras (2s, 2d) du levier hydraulique, les bras étant reliés entre eux par une barre de raidissement (CL), chaque cylindre hydraulique comprenant une chambre d'expansion, et dans lequel le circuit hydraulique (HC) comprend
. un dispositif de commande (EHR) et
. une conduite hydraulique unique et commune (Sc) disposée pour relier le dispositif de commande aux deux chambres d'expansion des deux cylindres hydrauliques,
dans lequel le dispositif de commande (EHR) est disposé pour commander un flux d'huile hydraulique à partir d'une source d'huile hydraulique (Pression) vers les deux chambres d'expansion pendant le levage des bras et à partir des chambres d'expansion vers un réservoir de récupération (Réservoir) pendant l'abaissement des bras,
le procédé comprenant une première étape d'interconnexion fonctionnelle desdites chambres d'expansion uniquement lorsqu'elles sont connectées simultanément à la source d'huile hydraulique ou audit réservoir de récupération, et une seconde étape de déconnexion mutuelle lorsque le levier est à l'arrêt.

7. Procédé selon la revendication 6, dans lequel la seconde étape consiste à connecter les deux chambres d'expansion audit réservoir de récupération, indépendamment l'une de l'autre.

8. Procédé selon la revendication 7, dans lequel la connexion indépendante des chambres d'expansion avec le réservoir de récupération est réalisée au moyen d'une vanne d'arrêt.
